# EUROPEAN PATENT APPLICATION

(11) **EP 3 667 080 A1**
(43) Date of publication of application: **17.06.2020**
(21) Application number: 18212385.1
(22) Date of filing: 13.12.2018
(51) Int. Cl.: F03D 17/00

(54) **WIND TURBINE BLADE FLOW REGULATION**

(71) Applicant: Siemens Gamesa Renewable Energy A/S, 7330 Brande (DK)
(72) Inventor: Egedal, Per, 7400 Herning (DK); Enevoldsen, Peder Bay, 7100 Vejle (DK); Fiedel, Moritz, 22297 Hamburg (DE); Gonzalez, Alejandro Gomez, 8000 Aarhus (DK); Hoegh, Gustav, 7100 Vejle (DK); Kristensen, Mikkel Aggersbjerg, 7400 Herning (DK)
(74) Representative: Aspacher, Karl-Georg

(57) **Abstract**

It is disclosed a wind turbine (10) including:
- at least a rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- a pressure supply system (52) for providing a pressurized fluid for operating the aerodynamic device (30) between a first protruded configuration and a second retracted configuration,
- a control unit (51) for controlling the pressure supply system (52),
- a monitor unit (54) for monitoring a pressure and/or a flow rate of the pressurized fluid, and configured for:
- receiving a measured pressure and/or flow rate signal in at least one section of the pressure supply system (52),
- deriving an operative status of the aerodynamic device (30) based on the measured pressure and/or flow rate signal.

## Description

### Field of invention

The present invention relates to a method for detecting the status in an aerodynamic device for regulating the flow on the surface of a blade for a wind turbine. The present invention further relates to a wind turbine including control and monitor devices for regulating the flow on the surface of a blade for a wind turbine and detecting the status aerodynamic device for regulating such flow.

### Art Background

A wind turbine rotor blade may have installed a flow regulating device on its surface, which flows from the leading edge to the trailing edge of a rotor blade of a wind turbine. An example of such a flow regulating device is a vortex generator (VG) installed on the suction side of the wind turbine rotor blade. In general, a flow regulating device may be considered to comprise a device which is capable of enhancing the lift coefficient of the aerofoil section, for example by increasing the level of energy of the boundary layer of the rotor blade.

Other aerodynamic devices may act in concert with the vortex generator and may influence the effect of the vortex generator depending on the state of the spoiler. Examples of the latter aerodynamic device are typically spoilers, installed on the suction side of the blade, between the trailing edge and the vortex generator. Alternatively, spoilers may be present alone, i.e. not combined with vortex generators or other flow regulating devices. Spoilers may be configured such that its shape and/or orientation can be regulated, e.g. by a pneumatic or hydraulic or mechanical actuator.

The spoiler may act in concert with the vortex generator and may influence the effect of the vortex generator depending on the state of the spoiler, i.e. a protrusion height and/or tilt angle by which the spoiler extends from or is tilted relative to other surface portions of the rotor blade.

EP 1 623 111 B1 discloses a wind turbine blade including adjustable lift-regulating means arranged on or at the surface of the wind turbine blade and extending in the longitudinal direction of the blade and an activation means by which the lift-regulating means can be adjusted and thus alter the aerodynamic properties of the blade. The lift-regulating means comprise one or more flexible flaps.

US 8 851 840 B2 discloses a wind turbine blade comprising a blade body and a device for modifying the aerodynamic surface or shape of the blade, wherein a pneumatic actuator controls the position and/or movement of the device, wherein a pressure chamber positioned within the blade body is present. The pressure chamber may be pressurized thereby changing the state of the device, thereby modifying the aerodynamic surface or shape of the blade.

US 5 106 265 A discloses a wind turbine wing comprising a pneumatically actuated spoiler movable perpendicular to an airstream.

WO 2018/041420 disclose a rotor blade comprising an aerodynamic device for influencing the air flow flowing from the leading edge section of the rotor blade to the trailing edge section of the rotor blade, wherein the aerodynamic device is mounted at a surface of the rotor blade and comprises a pneumatic or hydraulic actuator, such as a hose or a cavity of which the volume depends on the pressure of the fluid being present inside the pneumatic or hydraulic actuator.

It is desirable to monitor the performance of the spoilers or other flow regulating aerodynamic devices regulated by a pneumatic or hydraulic actuator and their influence on the wind turbine power production. In particular, there may be a need to identify when a flow regulating aerodynamic device of such type is faulty.

### Summary of the Invention

This need may be met by the subject matter according to the independent claims. Advantageous embodiments of the present invention are described by the dependent claims.

According to a first aspect of the present invention, it is provided a wind turbine including:
- at least a rotor blade comprising an aerodynamic device for influencing the airflow flowing from the leading edge section of the rotor blade to the trailing edge section of the rotor blade, wherein the aerodynamic device is mounted at a surface of the rotor blade,
- a pressure supply system for providing a pressurized fluid for operating the aerodynamic device between a first protruded configuration and a second retracted configuration,
- a monitor unit for monitoring a pressure and/or a flow rate of the pressurized fluid.
The monitor unit is configured for:
- receiving a measured pressure and/or flow rate signal in at least one section of the pressure supply system (52),
- deriving an operative status of the aerodynamic device (30) based on the measured pressure and/or flow rate signal.
The above described arrangement allows comparing expected pressure patterns with actual pressure and/or flow rate patterns, in particular during transients. From the comparison the operative status of the aerodynamic device can be derived and sent to a supervision control system, which will take the necessary actions to mitigation this situation.

According to embodiments of the present invention, the pressure supply system comprises:
- a first pressure control volume containing a pressurized fluid at a first pressure value,
- a second pressure control volume containing the pressurized fluid at a second pressure value higher than the first pressure value,
- a pressure line for providing the pressurized fluid from an actuator of the aerodynamic device to the first pressure control volume and from the second pressure control volume to the actuator of the aerodynamic device,
- at least one pressure sensor (59) and/or one flow rate sensor for measuring the pressure and/or the flow rate of the pressurized fluid in at least one section of the pressure supply system (52), the monitor unit (54) being connected to the at least one pressure sensor (59) and/or one flow rate sensor.

According to embodiments of the present invention, the pressure supply system comprises a nozzle upstream the first pressure control volume.
Advantageously, having a nozzle at the output of the de-pressurizing valves and upstream to the first low pressure control volume insures a measurable pressure in the system while there is a flow.

According to embodiments of the present invention, the pressure supply system may comprise:
- at least one de-pressurizing valve for connecting the pressure line to the first pressure control volume in such a way that the pressurized fluid flows from the actuator of the aerodynamic device to the first pressure control volume, the control unit and the monitor unit being connected to the at least one de-pressurizing valve,
- at least one pressurizing valve for connecting the pressure line to the second pressure control volume in such a way that the pressurized fluid flows from the second pressure control volume to the actuator of the aerodynamic device, the control unit and the monitor unit being connected to the at least one pressurizing valve,

According to a second aspect of the present invention, it is provided a method for detecting the operative status of an aerodynamic device for influencing the airflow flowing from the leading edge of a rotor blade for a wind turbine to the trailing edge of the rotor blade. The aerodynamic device is movable by an actuator between a first protruded configuration and a second retracted configuration by means of a pressure supply system. The method comprises the steps of:
- measuring a pressure signal and/or a flow rate signal in at least a section of the pressure supply system,
- deriving an operative status of the aerodynamic device based on the measured pressure signal and/or the measured flow rate signal.

According to embodiments of the present invention, the method comprises the steps of:
- measuring a temporal course of the pressure and/or the flow rate in at least a section of the pressure supply system,
- comparing the measured temporal course of the pressure and/or the flow rate in at least a section of the pressure supply system with a desired pressure temporal course,
- deriving an operative status of the aerodynamic device based on the comparison between the measured temporal course of the pressure and/or the flow rate in at least a section of the pressure supply system with a desired pressure temporal course.

According to embodiments of the present invention, the measuring of a temporal course of a pressure and/or flow rate in at least a section of the pressure supply system is performed during pressurizing or de-pressurizing of a pressure line for providing the pressurized fluid to an actuator of the aerodynamic device.
In particular, according to an embodiment of the present invention, if during pressurizing or de-pressurizing of the pressure line, the measured temporal course of the pressure and/or the flow rate increases and/or decreases faster or slower than a desired pressure and/or flow rate temporal course, then a "Faulty Closed" or "Faulty Open" status of the aerodynamic device is derived.
The "Faulty Closed" status defines a status of the aerodynamic device, where the aerodynamic device remains permanently in a retracted configuration or is not able to completely reach a completely protruded configuration.

The "Faulty Open" status defines a status of the aerodynamic device, where the aerodynamic device remains permanently in a protruded configuration or is not able to completely reach a completely retracted configuration.

According to embodiments of the present invention, the method comprising the steps of:
- calculating a frequency spectrum of the pressure and/or the flow rate signal,
- deriving an operative status of the aerodynamic device based on the frequency spectrum.

It should be understood that features which have individually or in any combination been disclosed, described or provided for a method for detecting the operative status of an aerodynamic device may also, individually or in any combination applied for or provided for an arrangement for detecting the operative status of an aerodynamic device in a wind turbine (in particular comprised in a blade for a wind turbine) according to embodiments of the present invention and vice versa

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine;
- Figure 2: shows a rotor blade of a wind turbine including an aerodynamic device;
- Figures 3: and 4 show a radial section of the rotor blade of figure 2;
- Figure 5: shows a diagram describing a pneumatic arrangement according to the present invention included in the wind turbine of figure 1;
- Figure 6: shows temporal course of operational values of the wind turbine of figure 1, in normal operative condition;
- Figure 7: shows temporal course of operational values of the wind turbine of figure 1, in a first faulty operative condition;
- Figure 8: shows temporal course of operational values of the wind turbine of figure 1, in a second faulty operative condition.

### Detailed Description

The drawings are in schematic form. Similar or identical elements are referenced by the same or different reference signs.

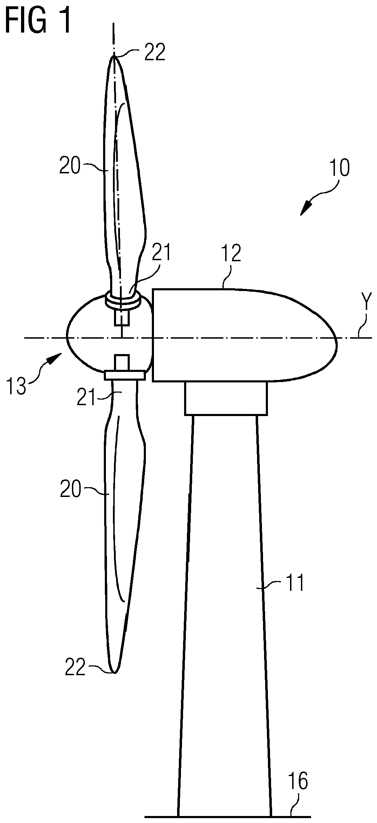

**Figure 1** shows a conventional wind turbine 10 for generating electricity. The wind turbine 10 comprises a tower 11 which is mounted on the ground 16 at one end. At the opposite end of the tower 11 there is mounted a nacelle 12. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). Furthermore, the wind turbine 10 comprises a hub 13 which is rotatable about a rotor axis Y. When not differently specified, the terms axial, radial and circumferential in the following are made with reference to the rotor axis Y.
The hub 13 is often described as being a part of a wind turbine rotor, wherein the wind turbine rotor is capable to rotate about the rotor axis Y and to transfer the rotational energy to an electrical generator (not shown).

The wind turbine 1 further comprises at least one blade 20 (in the embodiment of Figure 1, the wind rotor comprises three blades 20, of which only two blades 20 are visible) mounted on the hub 13. The blades 4 extend substantially radially with respect to the rotational axis Y.
Each rotor blade 20 is usually mounted pivotable to the hub 13, in order to be pitched about respective pitch axes X. This improves the control of the wind turbine and in particular of the rotor blades by the possibility of modifying the direction at which the wind is hitting the rotor blades 20. Each rotor blade 20 is mounted to the hub 13 at its root section 21. The root section 21 is opposed to the tip section 22 of the rotor blade.

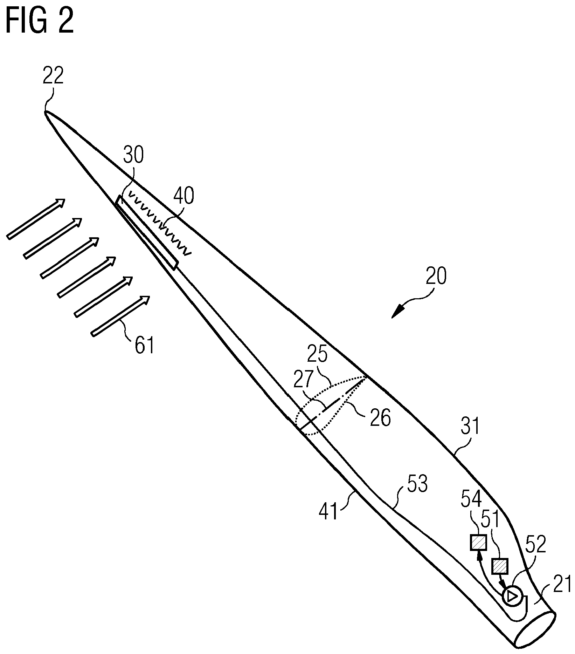

**Figure 2** illustrates the rotor blade 20 comprising an aerodynamic device 30 in the form of an actuated spoiler. Between the root section 21 and the tip section 22 the rotor blade 20 furthermore comprises a plurality of aerofoil sections for generating lift. Each aerofoil section comprises a suction side 25 and a pressure side 26. The aerofoil shape of the aerofoil portion is symbolized by one aerofoil profile which is shown in Figure 2 and which illustrates the cross-sectional shape of the rotor blade at this spanwise position. Also note that the suction side 25 is divided or separated from the pressure side 26 by a chord line 27 which connects a leading edge 41 with a trailing edge 31 of the rotor blade 20.
The aerodynamic device 30 is arranged on the suction side 25 between the leading edge 41 and the trailing edge 31.

The aerodynamic device 30 in Figure 2 is movable by means of a pressure line 53 or other pneumatic actuator, for example an inflatable cavity, or by means of an hydraulic actuator.

The pressure line 53 is comprised in a pressure supply system 52, controlled by a control unit 51 and monitored by a monitor unit 54. The pressure supply system 52 provides a pressurized fluid, for example pressurized air or other pressurized gasses. In this context, the term "pressurized fluid" not only implies positive pressure but also negative pressure, wherein fluid is sucked (or "drawn") out of the pressure hose of the aerodynamic device 30. The pressure line 53 could be in practice realized as tubes or pipes which do not significantly change their volume. Finally, the control unit 51 is responsible for setting a specific pressure at the pressure supply system 52 which subsequently leads to a certain predetermined pressure at the aerodynamic device 30. In the example shown in Figure 2, the control unit 51, the pressure supply system 52 and the monitor unit 54 are located in the root section 21 of the rotor blade 20. According to other embodiments of the present invention (not shown in the attached figures), these parts could also be placed elsewhere in the wind turbine, such as e.g. in the hub 13 of the wind turbine 10.
The rotor blade 20 additionally comprises a flow regulating unit 40 comprising multiple pairs of vortex generators.
The flow regulating unit 40 are arranged on the suction side 25 of the blade 20 between the aerodynamic device 30 and the the trailing edge 31.
According to other embodiments of the present invention (not shown in the attached figures), the flow regulating unit 40 are arranged on the suction side 25 of the blade 20 between the leading edge 41 and the aerodynamic device 30.
According to other embodiments of the present invention (not shown in the attached figures), the flow regulating unit 40 are not present and only the aerodynamic device 30 is used to regulate the flow on the surface of the blade 20.

According to other embodiments of the present invention (not shown in the attached figures), the blade 20 comprises a plurality of aerodynamic devices 30.

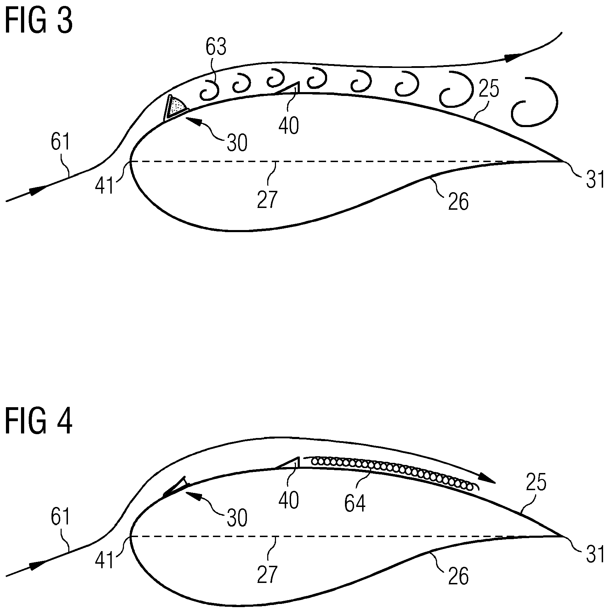

Figure **3** shows the aerodynamic device 30 in a first protruded configuration.
In the first configuration the aerodynamic device 30 deviates the airflow 61 which is flowing from the leading edge 41 to the trailing edge 31 of the rotor blade.
The aerodynamic device 30 in the first protruded configuration induces stall. This is visualized with relatively large vortices 63 downstream of the aerodynamic device 30. A consequence of the induced stall is a decrease in lift of the rotor blade and, consequently, a reduced loading of the rotor blade and related components of the wind turbine.

Figure **4** shows the aerodynamic device 30 in a second retracted configuration, i.e. moved downwards towards the surface of the rotor blade 20.
In this second configuration, the airflow 61 flowing across the aerodynamic device 30 remains attached to the surface of the rotor blade 20, thus that no flow separation, i.e. stall, occurs. As a consequence, the lift of the rotor blade increases. Re-energizing vortices 64 are generated in the boundary layer by the vortex generators 40, which have the effect of helping increasing the lift. As a result, the highest lift values can be achieved.

By operating the actuator, i.e. the pressure line 53, of the aerodynamic device 30, the aerodynamic device 30 can be moved between the first protruded configuration and the second retracted configuration in order to vary the aerodynamic properties of the blade as desired and requested when operating the wind turbine 10.

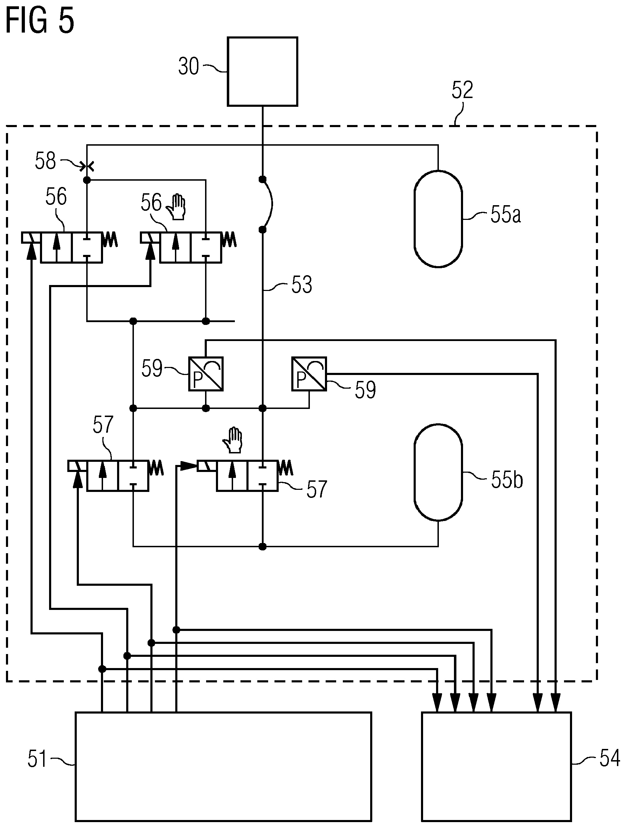

Figure **5** shows a pneumatic scheme of the pressure supply system 52 and the connections between the pressure supply system 52 and the control unit 51, the monitor unit 54 and the aerodynamic device 30.
The pressure supply system 52 comprises a first control volume 55a and a second control volume 55b connected to the pressure line 53, respectively through at least one de-pressurizing valve 56 (two de-pressurizing valves 56 in the embodiment of figure 5, for redundancy purpose) and through at least one pressurizing valve 57 (two pressurizing valves 57 in the embodiment of figure 5, for redundancy purpose).
In the embodiment of figure 3, the first control volume 55a and the second control volume 55b are confined in respective tanks. According to other possible embodiments (not shown), each control volume is part of larger volume.
The first pressure control volume 55a contains a pressurized fluid at a first pressure value while the second pressure control volume 55b contains the pressurized fluid at a second pressure value higher than the first pressure value.
The pressure line 53 provides the pressurized fluid from an actuator of the aerodynamic device 30 to the first pressure control volume 55a and from the second pressure control volume 55b to the actuator of the aerodynamic device 30.
The pressure supply system 52 further comprises at least one pressure sensor 59 (two pressure sensors 59 in the embodiment of figure 5, for redundancy purpose) for measuring the pressure of the pressurized fluid in the pressure line 53. According to other embodiments of the present invention (not shown), the pressure sensors 59 may be used to measure the pressure in another section of the pressure supply system 52, for example in the pressure line 53 near to the aerodynamic device 30. The pressure sensors could also be placed at the end of a return hose (not represented) from the aerodynamic device 30 to pressure supply system 52.
According to other embodiments of the present invention (not shown), one or more flow rate sensors may be used for measuring a mass or volume flow rate signal in at least one section of the pressure supply system 52, for example immediately upstream of the pressure line 53 or in the pressure line 53 itself.

A nozzle 58 is provided in the pressure supply system 52 between the two de-pressurizing valves 56 and the first pressure control volume 55a.
The de-pressurizing valves 56 are distribution valves with two positions and two ports and connect the pressure line 53 to the first pressure control volume 55a in such a way that the pressurized fluid flows from the actuator of the aerodynamic device 30 to the first pressure control volume 55a.
The two pressurizing valves 57 are distribution valves with two positions and two ports and connect the pressure line 53 to the second pressure control volume 55b in such a way that the pressurized fluid flows from the second pressure control volume 55b to the actuator of the aerodynamic device 30, the control unit 51 and the monitor unit 54 being connected to the at least one pressurizing valve 57.
The control unit 51 is connected to the de-pressurizing valves 56 and to the pressurizing valves 57 in order to operate such valves 56, 57.
The monitor unit 54 is connected to the de-pressurizing valves 56, to the pressurizing valves 57 and to the pressure sensors 59.
In embodiments where more flow rate sensors are present, the monitor unit 54 is connected to the flow rate sensors. According to other embodiments, the present invention may be applied to other pressure supply systems having different schemes including, for example, pumps and/or blowers, valves for controlling pressure and/or flow rate of the pressurized fluid and one or more pressure tanks or control volumes. Pressure or air flow sensors could be placed between the pumps/blower and the control volumes and/or in connection with the individual pressure lines.

The monitor unit 54 is configured for:
- comparing the measured temporal course of the pressure measured by the pressure sensors 59 with a desired pressure temporal course,
- deriving an operative status of the aerodynamic device 30, based on such comparison.

Alternatively, or in addition thereto, the monitor unit 54 is configured for:
- comparing a measured temporal course of the flow rate with a desired flow rate temporal course,
- deriving an operative status of the aerodynamic device 30, based on such comparison.

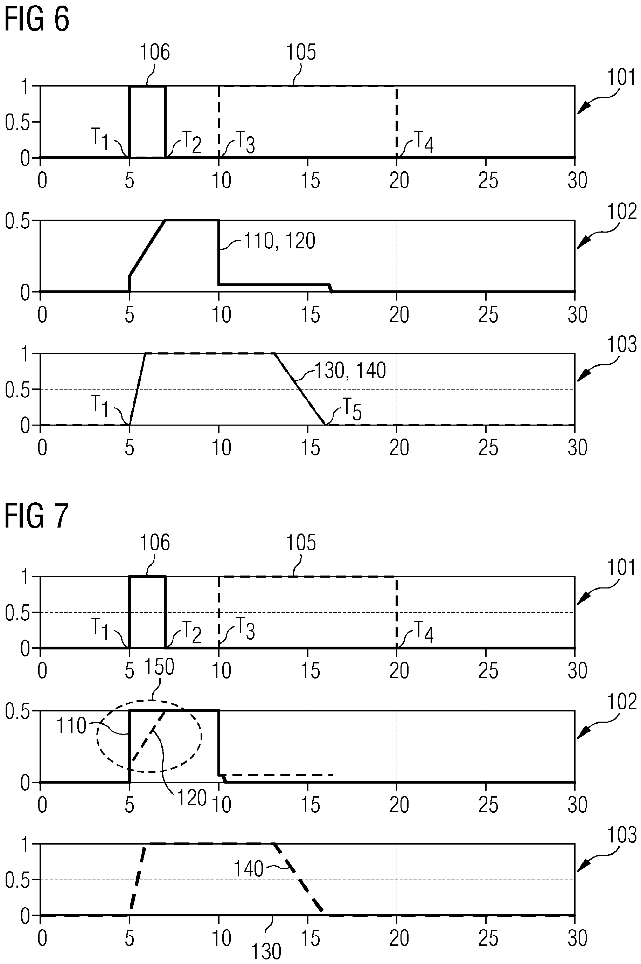

Figure **6** to **8** show embodiments of respective executions of a method for detecting the operative status of the aerodynamic device 30.
In embodiments of the present invention, such method is performed using the above described pressure supply system 52 in connection with the control unit 51 and the monitor unit 54. Each of the figures **6** to **8** comprises:
- a first diagram 101 representing the valve states 105, 106 of the de-pressurizing valves 56 and of the pressurizing valves 57, respectively;
- a second diagram 102 representing the measured temporal course 110 of the pressure measured by the pressure sensors 59 superposed to a desired pressure temporal course 120;
- a third diagram 103 representing the actual position 130 of the the aerodynamic device 30 superposed to an expected position 140 of the the aerodynamic device 30. The expected position correspond theoretically to the valve states of the de-pressurizing valves 56 and of the de-pressurizing valves 57, when the the aerodynamic device 30 and their actuator are faultless. In the third diagram 103 the ordinate "1" corresponds to the first protruded configuration of the aerodynamic device 30 (Figure 3) while the ordinate "0" corresponds to the second retracted configuration of the aerodynamic device 30 (Figure 4).
With reference to the first diagram 101, in all the figures 6 to 8, the pressurizing valves 57 are activated, i.e. for connecting the second pressure control volume 55b to the actuator of the aerodynamic device 30, in a first time interval T1 to T2, while the de-pressurizing valves 56 are activated, i.e. for connecting the actuator of the aerodynamic device 30 to the first pressure control volume 55a, in a second time interval T3 to T4, subsequent to the first time interval T1 to T2. This produces the transients in the measured temporal course 110 of the pressure shown in the second diagram 102 and in the expected position 140 of the the aerodynamic device 30 shown in the third diagram 103. The transients correspond to ordinate values of pressure and position, respectively, comprised between zero and respective maximum values of pressure and position.
According to embodiments of the present invention, in each valve pair constituted by the two de-pressurizing valves 56 or by the two pressurizing valves 57, both valves can be activated and deactivated together or one by one. In the latter case the present invention can detect differences in the behaviour of the two valves of each pair and therefore be used also to detect a failure in each of the valves.
According to embodiments of the present invention, the operative status of the aerodynamic device 30 is derived by looking at the high frequency content in a frequency spectrum of the pressure signal. An aerodynamic device 30 when activated induces some "white noise" in the pressure into the hose because of flow forces, which could be detected by a Fast Fourier Transform (FFT) analysis.

Figure **6** shows the normal case, where the aerodynamic device 30 is behaving as expected. The pressure transient 110 has a specific pattern, which is the desired pressure temporal course 120, i.e. the expected pattern for the pressure signal as a function of the valve states. This pattern can be obtained by data driven models, where the pattern will be the average pattern of several valve activations and deactivations, or it could be based on simulation models. Consequently, the actual position 130 of the aerodynamic device 30 has also an expected trapezoidal pattern starting at time T1 from ordinate "0" (second retracted configuration), reaching through a ramp the maximum ordinate (first protruded configuration) and then reaching again second retracted configuration) at a time T5 comprise in the second time interval T3 to T4.

Figure 7 shows a first faulty case, corresponding to a case where the aerodynamic device 30 is blocked in the second retracted configuration (the actual position 130 of the aerodynamic device 30 is always at the value "0" in the third diagram 103). In this case the measured temporal course 110 builds up faster than expected, as highlighted by the difference 150 between the measured temporal course 110 and the desired pressure temporal course 120 during the first time interval T1 to T2. The measured temporal course 110 also decreases faster than expected. As shown at the beginning of the second time interval T3 to T4. By detecting the difference 150, the method according to the present invention can derive a "Faulty Closed" status of the aerodynamic device 30.

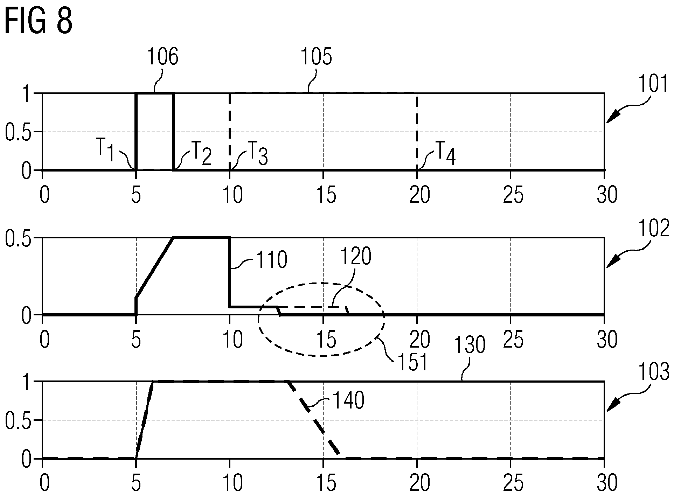

Figure **8** shows a second faulty case, corresponding to a case where the aerodynamic device 30 is blocked in the first protruded configuration (the actual position 130 of the aerodynamic device 30 is always at the maximum value in the third diagram 103, after the starting time T3 of the second time interval T3 to T4). In this case the pressure measured temporal course 110 decreases faster than expected in the second time interval T3 to T4. This is highlighted by the difference 151 between the measured temporal course 110 and the desired pressure temporal course 120 during the second time interval T3 to T4. By detecting the difference 151, the method according to the present invention can derive a "Faulty Open" status of the aerodynamic device 30.

## Claims

1. Wind turbine (10) including:
- at least a rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- a pressure supply system (52) for providing a pressurized fluid for operating the aerodynamic device (30) between a first protruded configuration and a second retracted configuration,
- a control unit (51) for controlling the pressure supply system (52),
- a monitor unit (54) for monitoring a pressure and/or a flow rate of the pressurized fluid,
wherein the monitor unit (54) is configured for:
- receiving a measured pressure and/or flow rate signal in at least one section of the pressure supply system (52),
- deriving an operative status of the aerodynamic device (30) based on the measured pressure and/or flow rate signal.

2. Wind turbine (10) according to claim 1, wherein the pressure supply system (52) comprises:
- a first pressure control volume (55a) containing the pressurized fluid at a first pressure value,
- a second pressure control volume (55b) containing the pressurized fluid at a second pressure value higher than the first pressure value,
- a pressure line (53) for providing the pressurized fluid from an actuator of the aerodynamic device (30) to the first pressure control volume (55a) and from the second pressure control volume (55b) to the actuator of the aerodynamic device (30),
- at least one pressure sensor (59) and/or one flow rate sensor for measuring the pressure and/or the flow rate of the pressurized fluid in at least one section of the pressure supply system (52), the monitor unit (54) being connected to the at least one pressure sensor (59) and/or one flow rate sensor.

3. Wind turbine (10) according to claim 2, wherein the pressure supply system (52) comprises:
- a nozzle (58) upstream the first pressure control volume (55a) .

4. Wind turbine (10) according to claim 3, wherein the pressure supply system (52) comprises:
- at least one de-pressurizing valve (56) for connecting the pressure line (53) to the first pressure control volume (55a) in such a way that the pressurized fluid flows from the actuator of the aerodynamic device (30) to the first pressure control volume (55a), the control unit (51) and the monitor unit (54) being connected to the at least one de-pressurizing valve (56),
- at least one pressurizing valve (57) for connecting the pressure line (53) to the second pressure control volume (55b) in such a way that the pressurized fluid flows from the second pressure control volume (55b) to the actuator of the aerodynamic device (30), the control unit (51) and the monitor unit (54) being connected to the at least one pressurizing valve (57),
- the nozzle (58) being placed between the at least one de-pressurizing valve (56) and the first pressure control volume (55a).

5. Rotor blade (20) for a wind turbine (10) including:
- an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- a pressure supply system (52) for operating the aerodynamic device (30) between a first protruded configuration and a second retracted configuration,
- a control unit (51) for controlling the pressure supply system (52),
- a monitor unit (54) for monitoring a pressure and/or a flow rate of the pressurized fluid,
wherein the monitor unit (54) is configured for:
- receiving a measured pressure and/or flow rate signal in at least one section of the pressure supply system (52),
- deriving an operative status of the aerodynamic device (30) based on the measured pressure and/or flow rate signal.

6. Method for detecting the operative status of an aerodynamic device (30) for influencing the airflow (61) flowing from the leading edge (41) of a rotor blade (20) for a wind turbine (10) to the trailing edge (31) of the rotor blade (20), the aerodynamic device (30) being movable by an actuator between a first protruded configuration and a second retracted configuration by means of a pressure supply system (52) for providing a pressurized fluid, the method comprising the steps of:
- measuring a pressure signal and/or a flow rate signal in at least a section of the pressure supply system (52),
- deriving an operative status of the aerodynamic device (30) based on the measured pressure signal and/or the measured flow rate signal.

7. Method according to claim 6, the method comprising the steps of:
- measuring a temporal course of the pressure and/or the flow rate in at least a section of the pressure supply system (52),
- comparing the measured temporal course of the pressure and/or the flow rate in at least a section of the pressure supply system (52) with a desired pressure temporal course,
- deriving an operative status of the aerodynamic device (30) based on the comparison between the measured temporal course of the pressure and/or the flow rate in at least a section of the pressure supply system (52) with a desired pressure temporal course.

8. Method according to claim 7, wherein the measuring of a temporal course of a pressure and/or flow rate in at least a section of the pressure supply system (52) is performed during pressurizing or de-pressurizing of a pressure line (53) for providing the pressurized fluid to an actuator of the aerodynamic device (30).

9. Method according to claim 7, wherein comparing the measured temporal course of the operational value with a desired temporal course of an operational value comprises calculating a difference between the pressure and/or the flow rate in at least a section of the pressure supply system (52) with a desired pressure and/or desired flow rate temporal course.

10. Method according to claim 8 or 9, wherein, if during pressurizing or de-pressurizing of the pressure line (53), the measured temporal course of the pressure and/or the flow rate increases and/or decreases faster or slower than a desired pressure and/or flow rate temporal course, then a faulty status of the aerodynamic device (30) is derived.

11. Method according to claim 7, the method comprising the steps of:
- calculating a frequency spectrum of the pressure and/or the flow rate signal,
- deriving an operative status of the aerodynamic device (30) based on the frequency spectrum.
